# EUROPÄISCHE PATENTANMELDUNG

(11) **EP 3 539 761 A1**
(43) Veröffentlichungstag der Anmeldung: **18.09.2019**
(21) Anmeldenummer: 19151742.4
(22) Anmeldetag: 15.01.2019
(51) Int. Cl.: B29D 30/06, B29C 33/10

(54) **ENTLÜFTUNGSEINHEIT FÜR EINE VULKANISATIONSFORM EINES FAHRZEUGLUFTREIFENS UND VULKANISATIONSFORM**

(30) Priorität: 16.03.2018 DE 102018204023
(71) Anmelder: Continental Reifen Deutschland GmbH, 30165 Hannover (DE)
(72) Erfinder: Dzick, Jürgen, 30926 Seelze (DE); Hoppe, Nicholas, 30419 Hannover (DE)
(74) Vertreter: Finger, Karsten

(57) **Zusammenfassung**

Entlüftungseinheit (3) für eine Vulkanisationsform eines Fahrzeugluftreifens mit einem in eine Entlüftungsbohrung (2) der Vulkanisationsform einpressbaren, zylindrischen Gehäuse (6), welches eine von einer Sitzfläche (8a) für einen Ventilteller (4) umlaufende Öffnung aufweist, und mit einem im Gehäuse (6) positionierten und gegenüber diesem beweglichen Ventileinsatz (7), welcher einen den Ventilteller (4) tragenden Ventilschaft (11) und eine einen Schaftabschnitt (11b) des Ventilschaftes (11) umgebende Schraubendruckfeder (14) aufweist, welche mit ihrem einen, gehäuseinnenseitigen Ende am Gehäuses (6) abgestützt ist, welches, wenn die Entlüftungseinheit in eine Vulkanisationsform eingesetzt ist, einen am Niveau der Forminnenseite ringförmig umlaufenden, an die Sitzfläche (8a) für den Ventilteller (4) unmittelbar anschließenden Rand (6a) aufweist.

Zwischen dem von der Schraubendruckfeder (14) umgebenen Schaftabschnitt (11b) des Ventilschaftes (11) und dem Ventilteller (4) ist ein den Ventilteller (4) und ein Federwiderlager (12) tragender stabartiger Schaftabschnitt (11a) vorgesehen.

## Beschreibung

Die Erfindung betrifft eine Entlüftungseinheit für eine Vulkanisationsform eines Fahrzeugluftreifens mit einem in eine Entlüftungsbohrung der Vulkanisationsform einpressbaren, zylindrischen Gehäuse, welches eine von einer Sitzfläche für einen Ventilteller umlaufene Öffnung aufweist, und mit einem im Gehäuse positionierten und gegenüber diesem beweglichen Ventileinsatz, welcher einen den Ventilteller tragenden Ventilschaft und eine einen Schaftabschnitt des Ventilschaftes umgebende Schraubendruckfeder aufweist, welche mit ihrem einen, gehäuseinnenseitigen Ende am Gehäuses abgestützt ist, welches, wenn die Entlüftungseinheit in eine Vulkanisationsform eingesetzt ist, einen am Niveau der Forminnenseite ringförmig umlaufenden, an die Sitzfläche für den Ventilteller unmittelbar anschließenden Rand aufweist.

In Vulkanisationsformen für Fahrzeugluftreifen befindet sich eine große Anzahl von Entlüftungsbohrungen, in Vulkanisationsformen für PKW-Reifen beispielsweise im Durchschnitt etwa 4.500 Entlüftungsbohrungen. Es ist üblich, in die Entlüftungsbohrungen Entlüftungseinheiten einzusetzen, die Ventileinsätze mit Ventiltellern enthalten, welche bei eingeformtem Reifenrohling die Entlüftungsbohrungen verschließen und das Entstehen von Gummiaustrieben während der Vulkanisation des Reifens zumindest weitgehend verhindern. Während des Einformens des Reifenrohlings sind die Ventileinsätze geöffnet, die von je einer Schraubendruckfeder beaufschlagten Ventilteller stehen an der Forminnenseite etwas über, sodass die erforderliche Entlüftung während des Einformens des Reifenrohlings stattfinden kann. Eine Entlüftungseinheit der eingangs genannten Art ist beispielsweise aus der DE 10 2016 209 912 A1 bekannt. Um einen exakten und optimalen Sitz der für eine einwandfreie Funktion der Entlüftungseinheit mitverantwortlichen Schraubendruckfeder sicherzustellen, weist bei dieser bekannten Ausführung der Ventilschaft unmittelbar an den Ventilteller anschließend einen zylindrischen Halteabschnitt auf, auf welchen die Schraubendruckfeder fest aufsteckbar ist.

Bestimmte Kautschukmischungen für Laufstreifen von Fahrzeugluftreifen, insbesondere solche für Winterreifen, durchlaufen beim Einformen des Rohreifens und beim Vulkanisieren besonders fließfähige Stadien. In Folge dieser hohen Fließfähigkeit kann nun die Kautschukmischung unerwünschter Weise in den Innenraum der Entlüftungseinheiten eindringen und verbleibt in dem engen Zwischenraum zwischen dem Gehäuse und dem Ventilschaft und verklebt den Zwischenraum, welcher zusätzlich durch die Schraubendruckfeder verkleinert ist. Die eindringende Kautschukmischung legt sich dabei auch um die Feder, die dann nicht mehr ordnungsgemäß funktionieren kann. Dies kann zur Folge haben, dass schon bei einer vergleichsweise geringen Anzahl von Heizzyklen, wobei unter einer geringen Anzahl weniger als 1.000 Heizzyklen zu verstehen sind, die Entlüftungseinheiten blockiert sind, da sie dicht mit Gummimaterial gefüllt sind. Dadurch ist keine ausreichende Entlüftung der Vulkanisationsform mehr möglich und am vulkanisierten Reifen entstehen Schwindstellen. Der vulkanisierte Reifen kann je nach Schweregrad der Schwindstellen qualitativ derart beeinträchtigt sein, dass er ausgeschieden werden muss. Des Weiteren muss die Vulkanisationsform aus der Reifenheizpresse ausgebaut werden, die Entlüftungseinheiten müssen entfernt werden und durch neue Entlüftungseinheiten ersetzt werden. Diese Maßnahmen verursachen neben einem Stillstand in der Produktion zusätzliche Kosten durch neue Entlüftungseinheiten und deren Einbau.

Der Erfindung liegt die Aufgabe zugrunde, eine Entlüftungseinheit der eingangs genannten Art derart zu gestalten, dass bei besonders fließfähigen Kautschukmischungen wesentlich mehr Heizzyklen möglich sind bis ein Austausch der Entlüftungseinheiten bzw. ihrer Ventileinsätze erforderlich ist.

Gelöst wird die gestellte Aufgabe erfindungsgemäß dadurch, dass zwischen dem von der Schraubendruckfeder umgebenen Schaftabschnitt des Ventilschaftes und dem Ventilteller ein den Ventilteller und ein Federwiderlager tragender stabartiger Schaftabschnitt vorgesehen ist, welcher zwischen dem Federwiderlager und dem Ventilteller eine Länge von mindestens 1,0 mm aufweist.

Die Schraubendruckfeder erstreckt sich daher nicht mehr bis zum Ventilteller, sondern ist auf einen kürzeren Abschnitt des Ventilschaftes aufgebracht als beim Stand der Technik. Der gemäß der Erfindung zwischen dem Ventilteller und diesem Schaftabschnitt vorgesehene stabartige Schaftabschnitt stellt einen größeren Raum zur Aufnahme von etwaig einfließendem Kautschukmischungsmaterial zur Verfügung, als dies beim Entlüftungsventil gemäß dem Stand der Technik der Fall ist. Es kann daher zwar Kautschukmischung in den Innenraum des Entlüftungsventils eindringen, jedoch ohne dieses bzw. die Schraubendruckfeder wie bisher zu blockieren. Dadurch kann die Anzahl der Heizzyklen wesentlich erhöht werden, bevor die Vulkanisationsform ausgebaut und Entlüftungseinheiten ersetzt werden müssen.

Bei einer bevorzugten Ausführung weist der stabartige Schaftabschnitt einen Durchmesser auf, welcher höchstens 60 % des Innendurchmessers des Gehäuses an dieser Stelle beträgt, sodass derart ein relativ großes Zwischenraumvolumen zur Aufnahme von etwaig eindringender Kautschukmischung zur Verfügung steht.

Aus Gründen der Stabilität des Ventilschaftes ist es ferner bevorzugt, wenn der stabartige Schaftabschnitt einen Durchmesser von mindestens 30 % des Innendurchmessers des Gehäuses aufweist. Der Durchmesser des stabartigen Schaftabschnittes beträgt daher insbesondere mindestens 0,6 mm.

Auch die Länge des stabartigen Schaftabschnittes kann in einem gewissen Bereich variiert werden, um Einfluss auf die Größe des Zwischenraumvolumens Einfluss zu nehmen. Bei einer bevorzugten Ausführung weist der Schaftabschnitt eine Länge von mindestens 3,0 mm auf. Dabei soll auch eine optimale Funktion der Entlüftungseinheit, insbesondere der Schraubendruckfeder sichergestellt sein. In diesem Zusammenhang ist es von Vorteil, wenn der stabartige Schaftabschnitt eine Länge von höchstens ein Drittel der Länge des Gehäuses aufweist.

Das am stabartigen Schaftabschnitt vorgesehene Federwiderlager weist bei einer weiteren bevorzugten Ausführung eine kreisringförmige Abstützfläche mit einem Außendurchmesser auf, welcher um 0,3 mm bis 0,6 mm geringer ist als der Innendurchmesser des Gehäuses an der Stelle des Federwiderlagers, sodass eine gute Abstützung der Schraubendruckfeder gewährleistet ist. Bei einer einfachen Ausführung ist das Federwiderlager in der Gestalt einer kreisringförmigen Scheibe ausgeführt, bei einer weiteren möglichen Ausführung kann das Federwiderlager auch als ein im Wesentlichen zylindrischer Abschnitt des Ventilschaftes mit einer entsprechenden Abstützfläche ausgeführt sein.

Besonders bevorzugt ist eine Ausführung, bei der an das Federwiderlager ein Halteabschnitt des Ventilschaftes anschließt, auf welchen die Schraubendruckfeder fest aufsteckbar ist. Der Außendurchmesser dieses Halteabschnittes wird entsprechend an den Innendurchmesser der Schraubendruckfeder angepasst. Dieser Halteabschnitt unterstützt besonders wirkungsvoll eine tadellose Funktion der Schraubendruckfeder zum Öffnen und Schließen des Ventiltellers.

Die der Erfindung zugrundeliegende Aufgabe wird alternativ und erfindungsgemäß auch dadurch gelöst, dass zumindest der Rand des Gehäuses und die Sitzfläche für den Ventilteller mit einer die Anhaftung von Kautschukmischungen und von Gummi vermindernden Beschichtung versehen sind.

Die haftmindernde Beschichtung am oberen und äußeren Gehäusebereich reduziert deutlich das Risiko, dass eine etwaige in die Entlüftungseinheit eindringende Kautschukmischung im Gehäuse verbleibt, wenn der fertig vulkanisierte Reifen entformt wird. Auch lässt sich die Anzahl der Heizzyklen wesentlich erhöhen, da ein Verkleben und Blockieren des Ventileinsatzes hintangehalten wird.

Besonders vorteilhaft ist diese Maßnahme bei Entlüftungseinheiten, bei welchen zwischen dem von der Schraubendruckfeder umgebenden Schaftabschnitt des Ventilschaftes und dem Ventilteller ein stabartiger Schaftabschnitt vorgesehen ist, welcher ein zusätzliches Aufnahmevolumen für etwaig eindringende Kautschukmischung schafft. Werden beide Maßnahmen zugleich getroffen kann die Anzahl der Heizzyklen, bis die Vulkanisationsform ausgebaut und Entlüftungseinheiten ersetzt werden müssen, oftmals erhöht werden. Die erfindungsgemäße Beschichtung zeigt jedoch auch eine deutliche Wirkung bei Entlüftungseinheiten, bei welchen gemäß dem Stand der Technik die Schraubendruckfeder den Ventilschaft bis zum Ventilteller reichend umgibt.

Zur Erzielung des erwähnten Effektes ist es ausreichend, wenn die Beschichtung sehr dünn ist, vorzugsweise eine Schichtdicke von 5 µm bis 30 µm aufweist, wobei die Schichtdicke auch vom Material und der Art des Aufbringens abhängig ist.

Besonders haltbar ist eine Beschichtung, welche eine durch PVD aufgebrachte Titannitrid-, Titancarbonitrid- oder Chromnitridschicht ist, ferner eine Beschichtung, welche eine durch CVD aufgebrachte Siliziumnitrid-, Titannitrid- oder Polytetrafluorethylenschicht ist sowie eine Beschichtung, welche eine durch ein Sprühverfahren aufgebrachte Schicht aus Polytetrafluorethylen ist.

Die Erfindung betrifft ferner eine Vulkanisationsform für Fahrzeugluftreifen mit Entlüftungsbohrungen, in welche erfindungsgemäß ausgeführte Entlüftungseinheiten eingesetzt sind, sowie einen Fahrzeugluftreifen, welcher in einer derartigen Vulkanisationsform vulkanisiert worden ist.

Weitere Merkmale, Vorteile und Einzelheiten der Erfindung werden nun anhand der Zeichnung näher beschrieben. Dabei zeigen
Fig. 1a und 1b schematisch Schnittdarstellungen eines Teilbereiches eines Formsegmentes einer Vulkanisationsform,
Fig. 2 einen vergrößerten Längsschnitt einer gemäß der Erfindung ausgeführten Entlüftungseinheit und
Fig. 3 einen vergrößerten Längsschnitt eines Gehäuses der Entlüftungseinheit.

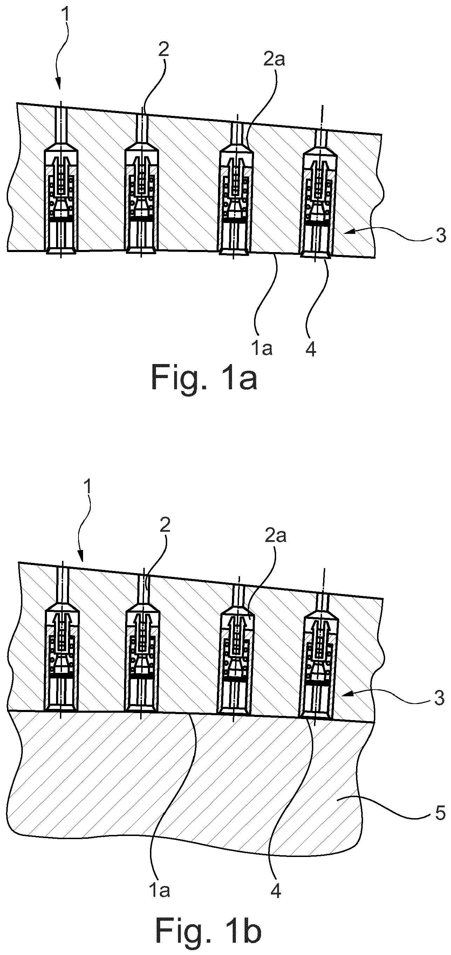

Fig. 1a und Fig. 1b zeigen Schnittdarstellungen eines Teiles eines Formsegmentes 1 einer Vulkanisationsform, welches bekannterweise gemeinsam mit einer Anzahl von weiteren Formsegmenten 1 einen Formring zur Ausformung des profilierten Laufstreifens eines in die Vulkanisationsform eingesetzten Fahrzeugreifens bildet. Die Schnitte durch das Formsegment 1 zeigen ferner Längsschnitte durch einige Entlüftungsbohrungen 2, welche in radialer Richtung orientiert sind und bei der gezeigten Ausführung an der Formsegmentinnenseite 1a einen Abschnitt 2a mit einem größeren Durchmesser aufweisen. Im Abschnitt 2a ist jeweils eine Entlüftungseinheit 3 eingesetzt, welche in der in Fig. 1a gezeigten Darstellung, ohne eingeformten Reifenrohling, sämtlich geöffnet sind. In dieser Lage stehen Feder beaufschlagte Ventilteller 4 etwas über die Formsegmentinnenseite 1a über. In Fig. 1b ist ein Reifenrohling, von welchem der Laufstreifen 5 angedeutet ist, bereits eingeformt, der Laufstreifen 5 hat die Ventilteller 4 in die in Fig. 1b gezeigte geschlossene Stellung gedrückt.

In der nachfolgenden detaillierten Beschreibung der Bestandteile einer Entlüftungseinheit 3 wird die Ausgestaltung dieser Bestandteile mit Bezug auf ihre Einbaulage im Formsegment 1 betrachtet, wobei sich beispielsweise die Bezeichnung "außen" auf die Position von Bestandteilen bei oder nahe der Formsegmentinnenseite 1a und die Bezeichnung "innen" auf die Position von Bestandteilen beim oder nahe beim inneren Endbereich der Entlüftungseinheit 3 beziehen.

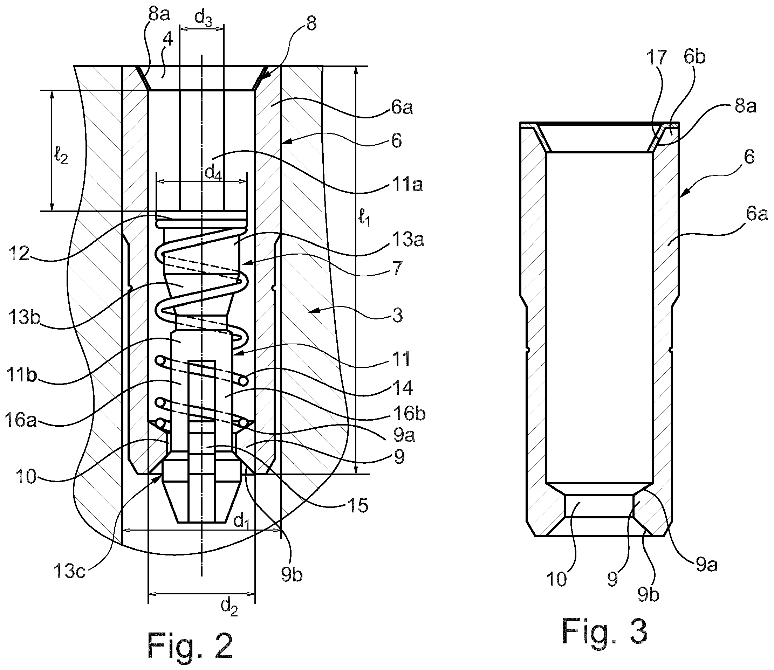

Die in Fig. 2 gezeigte Entlüftungseinheit 3 ist beispielhaft eine Entlüftungseinheit für eine Vulkanisationsform für PKW-Reifen und weist einen Durchmesser d₁ von etwa 3,2 mm auf. Der übliche Durchmesser solcher Entlüftungseinheiten beträgt 2,0 mm und bis 5,0 mm. Die Hauptbestandteile der Entlüftungseinheit 3 sind ein Gehäuse 6 und ein Ventileinsatz 7, wobei das Gehäuse 6 und der Ventileinsatz 7 gegenüber einer die Entlüftungseinheit 3 mittig durchsetzenden zentralen Achse a zumindest weitgehend rotationssymmetrisch ausgeführt sind

Das Gehäuse 6 weist eine Länge l₁ von beispielsweise ca. 8,5 mm auf und ist im Wesentlichen eine zylindrische Hülse mit einem, bis auf den inneren und den äußeren Endabschnitt, konstanten inneren Durchmesser d₂ von im Beispiel 2,18 mm. Nachdem die Entlüftungseinheit 3 in unterschiedlichen Größen gefertigt wird, variiert je nach der Größe auch der Innendurchmesser des Gehäuses 6 von 1,1 mm bis 2,2 mm. Das Gehäuse 6 weist einen im eingesetzten Zustand der Entlüftungseinheit 3 an die Bohrungsöffnung an der Formsegmentinnenseite 1a anschließenden Abschnitt 6a auf, dessen Außendurchmesser an den Innendurchmesser des Abschnittes 2a der Entlüftungsbohrung 2 derart angepasst ist, dass die Entlüftungseinheit 3 in die Entlüftungsbohrung 2 durch Presssitz eingesetzt werden kann.

Am äußeren, der Segmentinnenseite 1a zugewandten Endabschnitt ist das Gehäuse 6 innenseitig mit einer kegelstumpfförmigen Verbreiterung 8 versehen, die eine an die kegelstumpfförmige Gestalt des Ventiltellers 4 angepasste Sitzfläche 8a aufweist.

Am inneren Endabschnitt des Gehäuses 6 befindet sich innenseitig ein ringartig umlaufender Vorsprung 9, welcher eine mittige, kreisrunde Öffnung 10 umschließt, deren Innendurchmesser kleiner ist als der Innendurchmesser d₂ des Gehäuses 6. Der Vorsprung 9 ist zum Inneren des Gehäuses 6 und zum Ende des Gehäuses 6 und durch je eine umlaufende Schrägfläche 9a, 9b begrenzt. Beide Schrägflächen 9a, 9b und bewirken eine lokale Durchmesservergrößerung des Vorsprunges 9.

Der bereits erwähnte Ventileinsatz 7 ist ein langgestreckter, im Gehäuse 6 eingesetzter Bauteil mit einem Ventilschaft 11, welcher einen stabartigen äußeren Schaftabschnitt 11a aufweist, der an seinem äußeren Ende den Ventilteller 4 und an seinem inneren Ende ein Federwiderlager 12 trägt. Der Schaftabschnitt 11a weist eine Länge l₂ auf, die mindestens 1,0 mm, insbesondere mindestens 3,0 mm, und bis zu 30 % der Länge l₁ des Gehäuses 6 beträgt. Der Durchmesser d₃ des stabartigen Schaftabschnittes 11a beträgt mindestens 30% und höchstens 60 % des Innendurchmessers d₂ des Gehäuses 6. Der Durchmesser d₃ des Schaftabschnittes 11a ist bevorzugt konstant, der Schaftabschnitt 11a kann jedoch auch mehrere Abschnitte mit unterschiedlichen Durmessern innerhalb des angegebenen Durchmesserbereiches aufweisen. Das am inneren Ende des Schaftabschnittes 11a befindliche Federwiderlager 12 ist bei der dargestellten Ausführung kreisringförmig und weist einen Außendurchmesser d₄ auf, welcher größer ist als der Durchmesser d₃ des Schaftabschnittes 11a und insbesondere um 0,3 mm bis 0,6 mm geringer ist als der Innendurchmesser d₂ des Gehäuses 6. Das Federwiderlager kann auch ein im Wesentlichen zylindrischer, beispielsweise 0,5 mm hoher Abschnitt des Ventilschaftes 11 mit dem Durchmesser d₃ sein, an dessen innerer kreisfringförmiger "Grundfläche" die Schraubendruckfeder abgestützt ist. An das Federwiderlager 12 schließt ein Schaftabschnitt 11b an, welcher einen zylindrischen Halteabschnitt 13a aufweist, dessen Durchmesser etwas kleiner ist als jener des Federwiderlagers 12, sodass auf den Halteabschnitt 13a zumindest eine Windung einer Schraubendruckfeder 14 aufgesteckt werden kann. An den Halteabschnitt 13a schließt ein Zentrierabschnitt 13b an, welcher im Wesentlichen kegelstumpfförmig mit einem sich Richtung inneres Ende des Ventilschaftes 11 verringernden Durchmesser ausgeführt ist und an welchen ein durch einen Schlitz 15 in zwei Abschnittsteile 16a, 16b geteilter Verankerungsabschnitt 13c anschließt. Der Schlitz 15 gestattet ein Zusammendrücken bzw. Aufeinanderzubewegen der beiden Abschnittsteile 16a, 16b des Verankerungsabschnittes 13c zur Befestigung des Ventileinsatzes 7 beim Vorsprung 9 des Gehäuses 6. An den freien Enden sind die Abschnittsteile 16a, 16b mit verdickten Bereichen versehen, mit welchen sich der Ventileinsatz 7 in der eingesetzten Position unterhalb der Öffnung 10 am Vorsprung 9 abstützt. Die am Halteabschnitt 13a aufgesetzte Schraubendruckfeder 14 stützt sich mit ihrem zweiten Ende am das Gehäuse innenseitig umlaufenden Schrägfläche 9a des Vorsprunges 9 ab.

Der stabartige Schaftabschnitt 11a sorgt für einen größeren Zwischenraum im äußeren Bereich der Entlüftungseinheit 3. Dadurch kann für den Fall, dass von einer besonders fließfähigen Laufstreifen-Kautschukmischung eine etwas größere Menge in die Entlüftungseinheit 3 eindringt, diese im größeren Zwischenraum aufgenommen werden. Die Anzahl der Heizzyklen, bis es zu einer etwaigen Blockade der Entlüftungseinheit 3 kommt, ist daher bei einer erfindungsgemäß ausgeführten Entlüftungseinheit 3 wesentlich größer als bei jener gemäß dem Stand der Technik.

Eine Erhöhung der Anzahl der Heizzyklen kann ferner durch eine haftmindernde Beschichtung 17 erzielt werden, welche zumindest am forminnenseitig umlaufenden Rand 6b des Gehäuses 6 sowie an der die äußere Öffnung des Gehäuses 6 umlaufenden Schrägfläche 8a aufgebracht ist. Durch die haftvermindernde Beschichtung 17 in diesen Bereichen wird das Risiko, dass eine etwaig in die Entlüftungseinheit 3 eindringende Kautschukmischung im Gehäuse 6 verbleibt, wenn der fertig vulkanisierte Reifen entformt wird, deutlich vermindert. Das Aufbringen der Beschichtung 17 erfolgt bevorzugt unmittelbar nach dem Einsetzen des Gehäuses 6 in die Entlüftungsbohrung 2, so lange noch der Ventileinsatz 7 nicht montiert ist. Die Beschichtung 17 weist eine Schichtdicke von 2 µm bis 30 µm auf und ist beispielsweise eine durch eine PVD (Physical Vapor Deposition) aufgebrachte Beschichtung aus Titannitrid, Titancarbonitrid oder Chromnitrid, ferner eine Sprühbeschichtung, beispielsweise aus Polytetrafluorethylen oder eine durch CVD (Chemical Vapor Deposition) aufgebrachte Beschichtung, beispielsweise eine Siliziumnitrid- oder Titannitridschicht oder eine Schicht aus Polytetrafluorethylen.

### Bezugsziffernliste

- 1: Formsegment
- 1a: Formsegmentinnenseite
- 2: Entlüftungsbohrung
- 2a: Abschnitt
- 3: Entlüftungseinheit
- 4: Ventilteller
- 5: Laufstreifen
- 6: Gehäuse
- 6a: Abschnitt
- 7: Ventileinsatz
- 8: Verbreiterung
- 8a: Sitzfläche
- 9: Vorsprung
- 9a, 9b: Schrägfläche
- 11: Ventilschaft
- 11a, 11b: Schaftabschnitt
- 12: Federwiderlager
- 13a: Halteabschnitt
- 13b: Zentrierabschnitt
- 13c: Verankerungsabschnitt
- 14: Schraubendruckfeder
- 15: Schlitz
- 15: Schlitz
- 16a, 16b: Abschnittteile
- 17: Antihaftbeschichtung
- a: zentrale Achse
- d₁, d₂: Durchmesser
- d₃, d₄: Durchmesser
- l₁, l₂: Länge

## Patentansprüche

1. Entlüftungseinheit (3) für eine Vulkanisationsform eines Fahrzeugluftreifens mit einem in eine Entlüftungsbohrung (2) der Vulkanisationsform einpressbaren, zylindrischen Gehäuse (6), welches eine von einer Sitzfläche (8a) für einen Ventilteller (4) umlaufene Öffnung aufweist, und mit einem im Gehäuse (6) positionierten und gegenüber diesem beweglichen Ventileinsatz (7), welcher einen den Ventilteller (4) tragenden Ventilschaft (11) und eine einen Schaftabschnitt (11b) des Ventilschaftes (11) umgebende Schraubendruckfeder (14) aufweist, welche mit ihrem einen, gehäuseinnenseitigen Ende am Gehäuses (6) abgestützt ist, welches, wenn die Entlüftungseinheit in eine Vulkanisationsform eingesetzt ist, einen am Niveau der Forminnenseite ringförmig umlaufenden, an die Sitzfläche (8a) für den Ventilteller (4) unmittelbar anschließenden Rand (6a) aufweist,
**dadurch gekennzeichnet,**
**dass** zwischen dem von der Schraubendruckfeder (14) umgebenen Schaftabschnitt (11b) des Ventilschaftes (11) und dem Ventilteller (4) ein den Ventilteller (4) und ein Federwiderlager (12) tragender stabartiger Schaftabschnitt (11a) vorgesehen ist, welcher zwischen dem Federwiderlager (12) und dem Ventilteller (4) eine Länge (12) von mindestens 1,0 mm aufweist.

2. Entlüftungseinheit (3) nach Anspruch 1, **dadurch gekennzeichnet, dass** der stabartige Schaftabschnitt (11a) einen Durchmesser (d₃) aufweist, welcher höchstens 60% des Innendurchmessers (d₂) des Gehäuses (6) an dieser Stelle beträgt.

3. Entlüftungseinheit (3) nach Anspruch 1 oder 2, **dadurch gekennzeichnet, dass** der stabartige Schaftabschnitt (11a) einen Durchmesser (d₃) von mindestens 30% des Innendurchmessers (d₂) des Gehäuses (6) aufweist.

4. Entlüftungseinheit (3) nach Anspruch 1, **dadurch gekennzeichnet, dass** der stabartige Schaftabschnitt (11a) eine Länge (l₂) von mindestens 3,0 mm aufweist.

5. Entlüftungseinheit (3) nach Anspruch 1 oder 4, **dadurch gekennzeichnet, dass** der stabartige Schaftabschnitt (11a) eine Länge (l₂) von höchstens einem Drittel der Länge (l₁) des Gehäuses (6) aufweist.

6. Entlüftungseinheit (3) nach einem der Ansprüche 1 bis 5, **dadurch gekennzeichnet, dass** das am stabartigen Schaftabschnitt (11a) vorgesehene Federwiderlager (12) eine kreisringförmige Abstützfläche mit einem Außendurchmesser (d₄) aufweist, welcher um 0,3 mm bis 0,6 mm geringer ist als der Innendurchmesser (d₂) des Gehäuses (6) an dieser Stelle.

7. Entlüftungseinheit (3) nach einem der Ansprüche 1 bis 6, **dadurch gekennzeichnet, dass** an das Federwiderlager (12) ein Halteabschnitt (13a) des Ventilschaftes (11) anschließt, auf welchen die Schraubendruckfeder (14) fest aufsteckbar ist.

8. Entlüftungseinheit (3) für eine Vulkanisationsform eines Fahrzeugluftreifens mit einem in eine Entlüftungsbohrung (2) der Vulkanisationsform einpressbaren, zylindrischen Gehäuse (6), welches eine von einer Sitzfläche (8a) für einen Ventilteller (4) umlaufene Öffnung aufweist, und mit einem im Gehäuse (6) positionierten und gegenüber diesem beweglichen Ventileinsatz (7), welcher einen den Ventilteller (4) tragenden Ventilschaft (11) und eine einen Schaftabschnitt (11b) des Ventilschaftes (11) umgebende Schraubendruckfeder (14) aufweist, welche mit ihrem einen, gehäuseinnenseitigen Ende am Gehäuses (6) abgestützt ist, welches, wenn die Entlüftungseinheit in eine Vulkanisationsform eingesetzt ist, einen am Niveau der Forminnenseite ringförmig umlaufenden, an die Sitzfläche (8a) für den Ventilteller (4) unmittelbar anschließenden Rand (6a) aufweist,
**dadurch gekennzeichnet,**
**dass** zumindest der Rand (6a) und die Sitzfläche (8a) mit einer die Anhaftung von Kautschukmischungen und von Gummi vermindernden Beschichtung (17) versehen sind.

9. Entlüftungseinheit (3) nach Anspruch 8, **dadurch gekennzeichnet, dass** die Beschichtung (17) eine Schichtdicke von 5 µm bis zu 30 µm aufweist.

10. Entlüftungseinheit (3) nach Anspruch 8 oder 9, **dadurch gekennzeichnet, dass** die Beschichtung (17) eine durch PVD aufgebrachte Titannitrid-, Titancarbonitrid- oder Chromnitridschicht ist.

11. Entlüftungseinheit (3) nach Anspruch 8 oder 9, **dadurch gekennzeichnet, dass** die Beschichtung (17) eine durch CVD aufgebrachte Siliciumnitrid-, Titannitrid- oder Polytetrafluorethylenschicht ist.

12. Entlüftungseinheit (3) nach Anspruch 8 oder 9, **dadurch gekennzeichnet, dass** die Beschichtung (17) eine durch ein Sprühverfahren aufgebrachte Schicht aus Polytetrafluorethylen ist.

13. Vulkanisationsform für Fahrzeugluftreifen mit Entlüftungsbohrungen, in welche Entlüftungseinheiten (3) gemäß einem oder mehreren der Ansprüche 1 bis 7 oder gemäß einem oder mehreren der Ansprüche 8 bis 12 eingesetzt sind.

14. Fahrzeugluftreifen, welcher in einer Vulkanisationsform gemäß Anspruch 13 vulkanisiert worden ist.
